# EUROPEAN PATENT SPECIFICATION

(11) **EP 1 260 306 B1**
(45) Date of publication and mention of the grant of the patent: **16.08.2006**
(21) Application number: 01830319.8
(22) Date of filing: 18.05.2001
(51) Int. Cl.: B23Q 3/155, B23Q 3/157

(54) **Tool-holder storage device and machine tool including said storage device**
Vorrichtung zum Speichern von Werkzeugen und Werkzeugmaschine mit dieser Vorrichtung
Dispositif d'emmagasinage des outils et machine-outil avec ce dispositif

(43) Date of publication of application: 27.11.2002
(60) Divisional application: 06012057.3
(73) Proprietor: Paolino Bacci S.R.L., 56021 Cascina, PI (IT)
(72) Inventor: Ruggieri, Alberto, 56025 Pontedera, Pisa (IT)
(74) Representative: Mannucci, Michele

(56) References cited:
- EP-A- 0 648 574
- DE-A- 19 534 093
- US-A- 6 077 206
- US-B1- 6 228 006

## Description

This invention relates to a tool-holder storage device for a machine tool that is designed for automatically changing the tools supported by the spindle of the machine tool. The invention also relates to a machine tool including this type of storage device.

In many industrial sectors, numeric-control machine tools and/or work stations are adopted for carrying out chip-removal machining. In particular, in the field of manufacturing on of wooden articles for furniture, such as chairs and frames for sofas and settees, work stations and machine tools for machining their components are used. The machine tools or the work station includes one or more operating units whose head is provided with a single or multiple spindle in which a multitude of different tools can be fitted depending on the machining that must be done on the workpieces being machined. Frequently, during a single manufacturing cycle, one or more of the tools must be substituted since a plurality of different machining operations might have to be performed on a single workpiece (or workpieces processed sequentially), for example parting, boring, mortising, tenoning, internal or external turning, various forms of milling, etc.

Since the number of tools simultaneously available for use on the operating unit or operating units (for example, two) on the machine is limited, a tool-holder storage device may prove necessary in some cases, where the tools temporarily out of use can be deposited. At appropriate times during the manufacturing cycle, the operating unit is conveyed to the tool change area and one or more of the tools applied on the spindle or spindles of the unit itself are replaced with others which are temporarily deposited in the tool-holder storage device.

At present, tool-holder storage devices with various configurations are available for this purpose. Typically, and especially for the sector of machine tools designed for working with wood, tool-holder storage devices are used which are constituted by a disk-shaped unit that rotates on its own axis and that is usually, but not always, positioned in a horizontal layout. Various interchangeable tools can be found on this disk-shaped support.

One example of a tool-holder storage device is described in US-A-4,761,877. In this storage device, the tools are supported by a circular or disk-shaped unit that rotates around a horizontal axis. In US-A-3,263,300, a tool-holder storage device is described with a disk-shaped unit that rotates around a vertical axis and is positioned above the upright supporting the operating head of the machine tool.

US-A-5,097,877 describes a tool-holder storage device that includes a disk-shaped unit rotating around a vertical axis and that moves along an axis of translation, enabling the substitution of tools on a revolver head of a machine tool, whereby the storage device is found above the operating head.

GB-A-2,101,028 and GB-A-2,144,668 describe a tool-holder storage device for a turning lathe. In this case, too, the tool-holder storage device has a disk-shaped structure and rotates around an axis in order to present one or the other of the various seats to the turret of the machine tool for substituting the tools.

Other examples of tool-holder storage devices are described in EP-A0106595.

The tool-holder storage device must be positioned beyond the operational area of the operating unit and the envelope of the positions of the workpiece to be machined, and of the supports that clamp the workpiece into place, in order to prevent it from interfering with the movements of the unit during processing the workpiece. However, it must be located in a point easily accessible for the operating unit when a tool substitution operation must be done. For this purpose, the operating unit can be designed with an extra-run that conveys the spindle or spindles to an area outside the operational area but in proximity of the tool-holder storage device, in order to carry out the tool substitution. In this case, the tool-holder storage device can be arranged in a stationary position and the operating unit is conveyed either above or next to this. However, this solution requires an elevated volume and a particularly long guide for moving the operating unit, volumes and which are otherwise useless for the machining itself.

This is why it is better to design the tool-holder storage device to be moveable so that it can assume a concealed position with respect to the working area of the operating unit and is moved inside the working area only when the tool change operation must be done. For this purpose, the tool-holder storage device is supported by an oscillating arm that moves the storage device into the working area of the operating unit at the appropriate time. Furthermore, as mentioned previously, in order to present to the operating unit either the correct tool or the empty seat where the operating unit must deposit the tool no longer being used, the disk-shaped unit is designed for a rotational movement around its own axis.

This design, while resulting in reduced overall dimensions of the machine tool, still leads to a series of drawbacks. In the first place, two separate motors or actuators are necessary in order to control the movement of oscillation of the arm that supports the disk-shaped unit and to control the rotation of the disk-shaped unit around its axis. This makes the storage device expensive and complicated.

In the second place, the movement for introducing the tool-holder storage device into the operational area and the successive or contemporaneous positioning of the disk-shaped unit into the correct angular position are quite time consuming operations. This makes the total time of the manufacturing cycle longer.

DE-A-19534093 discloses a machine tool including the features of the preamble of claim 1. In this known machine tool large tools are arranged on a discoidal tool holder storage device which has a cut away portion. The operative head of the machine tool has a vertically arranged mandrel and is controlled along axes of translation. The tools are picked up from and replaced into said storage device by an auxiliary double-sided handling pickup device which transfers the tools from the storage device to the mandrel of the operating head and vice-versa.

The purpose of this invention is to design a tool-holder storage device and a machine tool equipped with such a storage device, which can overcome the drawbacks of the current art. In the context of the description given here and the annexed claims, the term "machine tool" generally refers to a work station or any other system equipped with an operating unit, too, including at least one spindle and controlled along one or more operational axes.

This object is achieved by the combination of features of claim 1. The dependent claims relate to particularly advantageous further developments of the invention.

Essentially, the invention envisages a tool-holder storage device for a machine tool, including a unit rotating around a respective axis of rotation with several supports for said tools, characterized in that said rotating unit has a portion of it removed along a first section of its perimeter development, said supports being arranged around the remaining section of the perimeter development of the rotating unit, the rotation around said axis introducing and removing the supports into and from a withdrawal and deposit area of the tools from and onto said supports.

In practice, since one portion has been removed, the rotating unit has an asymmetrical form with respect to a plane perpendicular to the rotating unit and including the axis of rotation of said rotating unit.

In practice, the supports of the tools are positioned along an arc of less than 360° in circumference, along which said supports are moved by the rotation of the rotating unit around the axis of rotation. For example, the supports can be distributed over an arc of just over 180°, or even less than 180°, for example even an arc of less than 90°. The smaller the arc along which the supports for the tools are distributed, the lesser will be the development of the unit rotating around its axis of rotation. If the tools are distributed on supports with their axis parallel to the axis of rotation, the tools can be positioned in a sufficient number even if they are distributed along an arc of less than 90°, for example.

In practice, with this arrangement, the supports of the tools are included in a sector of an annulus having a development of less than 360°, preferably less than 220° and if necessary, less than 90°.

As will appear evident by the description of some practical forms of embodiment, the storage device according to the invention enables to overcome the drawbacks of the prior art by obtaining a very compact machine tool. In fact, the tool-holder storage device can be positioned adjacent to the working area of the operating unit of the machine tool, so that by rotating the unit until the cut portion (that is, the straight edge in case it is a circular segment) is facing the working area of the operating unit, the rotating unit does not interfere with the working area; while, by rotating the rotating unit until the portion where the supports of the tools are positioned is facing towards the working area, the unit enters the area accessible by the operating unit.

This offers a series of advantages. In the first place, it is no longer necessary to design two motors for controlling the motion of the tool-holder storage device. In fact, the same motor that sets in motion the rotation of the rotating unit around its axis also conveys the various supports of the tools to the area accessible by the operating unit and determines the correct angular position in order to enable the unit to withdraw the correct tool and deposit the tool which no longer necessary by the spindle.

In the second place, it is possible to synchronize the angular movement of the rotating unit with the movement of the operating unit so that the total amount of time necessary for substituting the tools is reduced to a minimum. In fact, the axis controlling the rotation of the tool-holder storage device can be interpolated with the axis controlling the operating unit. The tool-holder storage device and the spindle are conveyed simultaneously to the position where the tool change is carried out, the movement of the storage device being a simple angular positioning movement of the rotating unit. This is not possible with the traditional storage devices that can be conveyed to the tool change area only after the operating unit has concluded its work, thus preventing collisions.

The invention will be easier to understand after carefully reviewing the description and the attached illustrations, which show a practical non-limiting embodiment of the invention. More specifically:
Fig. 1 is a plan view of the tool-holder storage device and of the operating unit;
Fig. 2 is view and partial section taken along the line II-II of Fig. 1;
Figs. 3A and 3B illustrate in a plan view the movement of the storage device for insertion of a tool;
Fig. 4 shows a section of a modified embodiment of the tool-holder storage device;
Fig. 5 shows another plan view of a further modified embodiment of the storage device which does not fall within the scope of the claims;
Fig. 6 shows a schematic plan view of a machine tool or a complete work station equipped with an operating unit and a tool-storage device according to the invention;
Figs. 7A and 7B schematically illustrate two examples of the sequence of movements for withdrawing a tool from the storage device and for depositing a tool in the storage device in a machine similar to the one illustrated in Fig.6.

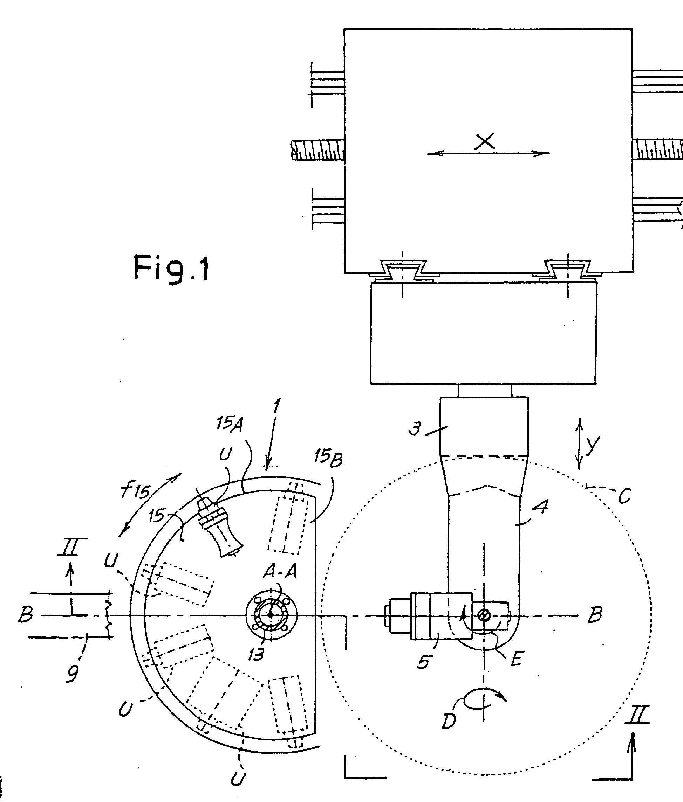

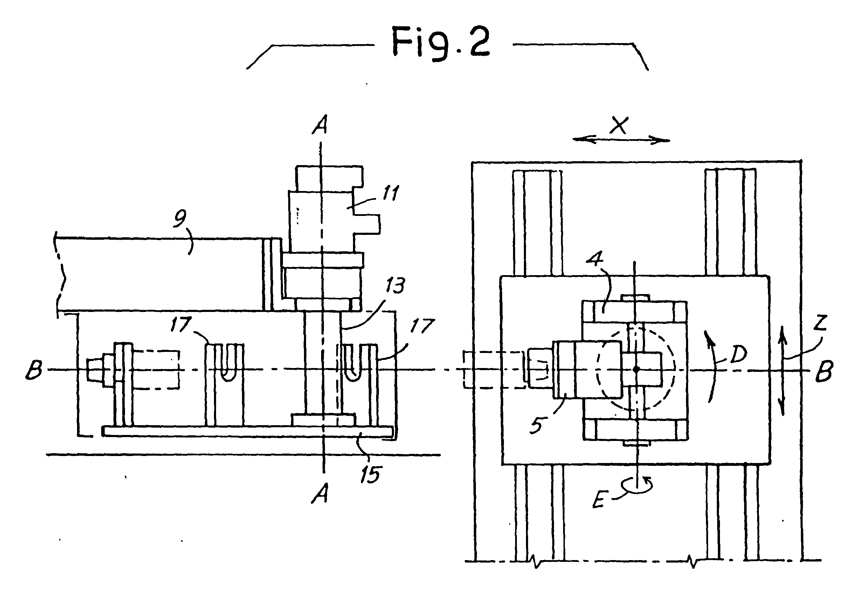

In Figs. 1 and 2, first embodiment of the invention is illustrated. The tool-holder storage device is generically designated 1, while 3 indicates an operating unit furnished with an operating head 3 with a fork bearing a spindle 5. In the example illustrated, the spindle can perform a variety of movements along numeric-control axes. In the example, two axes of horizontal translation X, Y and an axis of vertical translation Z are shown. There are also two oscillating movements around axes D and E. The structure of the operating unit and the type of movements are known per se and do not require further descriptions in this document. Not all the movements are indispensable for changing the tools.

The tool-holder storage device 1 is supported by a stationary beam 9, that in Fig. 1 is interrupted for a clearer understanding of the illustration. The support beam 9 supports a motor 11 whose outlet shaft drives into rotation a vertical shaft 13 that bears a rotating unit 15 on its end. As can be seen in detail in the plan view in Fig. 1, the rotating unit 15 has the shape of a cut disk and its perimeter edge is constituted by a first section in the shape of an arc of a circumference 15A and by a second section constituted by a chord 15B. Essentially, the rotating unit 15 has therefore the shape of a segment of a circle that in this example has a development greater than a semi-circle since the axis of rotation A-A is found inside the area delimited by the arc of circumference 15A and by the chord 15B. The section of the circle might have a smaller development, with the axis of rotation A-A positioned outside the segment itself. In this case, for example, a connecting arm could be provided between the supporting and rotation axis and the segment of the circle. The chord 15B constitutes the section of perimeter development along which a part of the rotating unit 15 has been removed, making this latter asymmetrical with respect to the axis A-A.

The rotating unit 15 is equipped with a plurality of supports 17 in order to house tools U that can be mounted on the spindle 5 in order to execute various forms of processing by means of the operating head 3 on a workpiece not shown. The supports 17 are positioned along the perimeter section of the rotating unit constituted by the arc of circumference 15A, that is, not along the section that corresponds to the portion of the axial-symmetric figure (circle) which has been removed to form the segment of the circle constituting the rotating unit (15).

The configuration of the supports 17 is such to keep the tools U with their axes in a radial position with respect to the rotating unit 15.

In Fig. 1, the operating unit is shown in the extreme operational position, namely, in the closest possible position to the storage device 1. In this position, the operating unit can still carry out its processing and therefore, the spindle 5 with the tool clamped to it must not interfere with the tool-holder storage device 1. C designates the circumference area of movement of the tool with the greatest axial dimension that can be mounted on spindle 5. As can be seen in Fig. 1, when the tool-holder storage device 1 is found in the angular position shown here, that is, with the edge constituted by the chord 15B facing towards the operating unit, the circumference C does not intersect with tool-holder storage device 1. Therefore, the operating unit can execute any movement in this position without risking a collision between the tool-holder storage device 1 and the tool mounted on the spindle 5 .

When it is necessary to change the tool supported by spindle 5, the motor 11 controls an angular movement around the axis of rotation A-A of the rotating unit 15, in the direction of the double arrow f15. The movement can be executed either only in the same direction or in a clockwise or counter-clockwise direction depending on the final position that the storage device must assume.

The movement is such to bring the spindle 5 into alignment with the support 17 required. This can be an empty support on which the spindle 5 must deposit the tool temporarily being used, or a support 17 on which the tool is found that must be inserted into spindle 5. In Fig. 1 the direction of alignment between the support and the spindle 5 is designed with B-B. The movement of rotation in the direction indicated by f15 of the rotating unit 15 is interpolated and synchronized with the movement of the operating head 3, and the two movements are controlled by the same programmable control unit, in order to reduce the time necessary for this operation. This means, for example, that the rotating movement of the rotating unit 15 can begin when the spindle 5 is found at a certain distance from the tool change area, where the machining on one workpiece is being completed. The rotation and angular positioning of the rotating unit 15 terminate when the spindle 5 is aligned along the straight line from B-B and completes the final movement in this direction in order to deposit the tool in the empty support 17, or in order to engage the new tool.

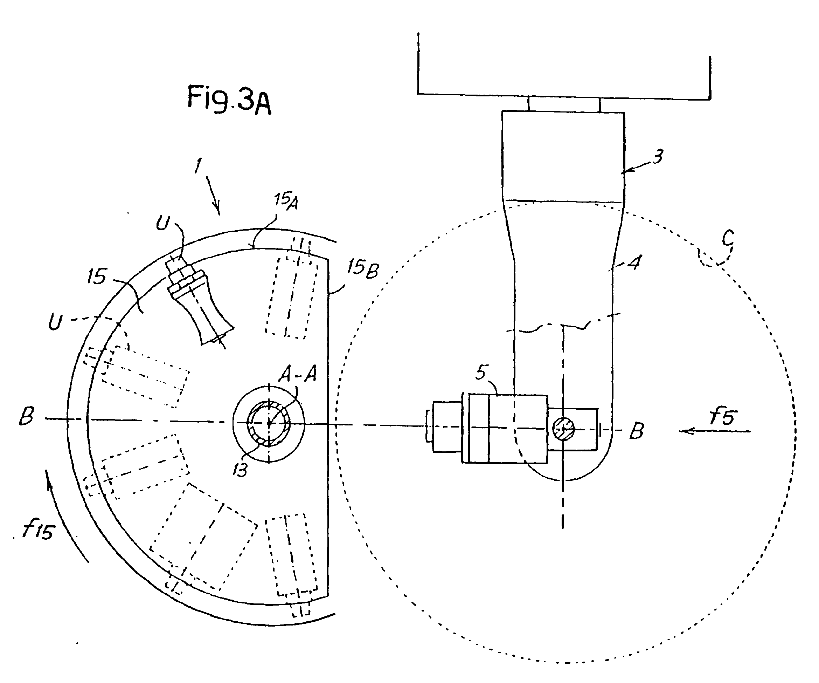

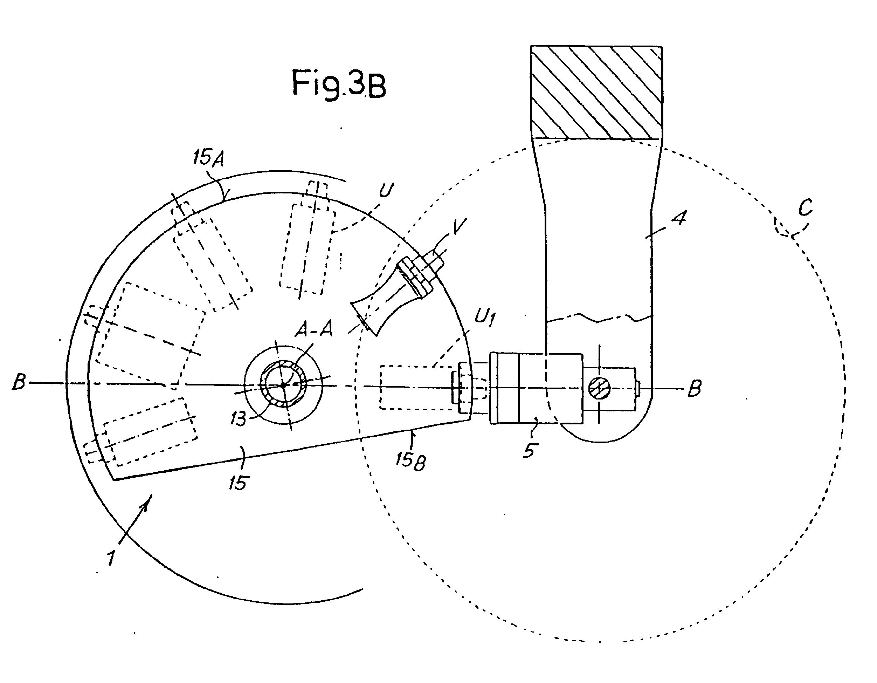

The movement carried out by the tool-holder storage device 1 and the spindle 5 to obtain the engagement of an tool is clearly illustrated in Figs. 3A and 3B. In Fig. 3A the storage device 1 is still in the concealed position with respect to the operational area of the operating head 3, that is, with the portion of the straight edge 15B of the rotating unit 15 turned towards the operating unit. The start of the movement of angular positioning is designated with f15. The spindle 5 is in the correct angular position and approaches the storage device according to arrow f5. In Fig. 3B, the tool-holder storage device 1 has reached the correct angular position with the tool U1 in the position aligned with the spindle 5 along the straight line B-B. The spindle 5 in the meantime has approached close enough to bring the shank of the tool U1 into engagement with the spindle itself. The movements designated by f5 and f15 are interpolated and synchronized as indicated above.

It seems clear from the above, that with the asymmetrical form obtained by removing along the chord 15B a portion of the figure of revolution (with axial symmetry with respect to A-A) making up the rotating unit, the possibility is achieved of introducing the supports 17 into the tool withdrawal and deposit area by the spindle as well as the possibility of selecting these supports, all with a single movement of controlled rotation.

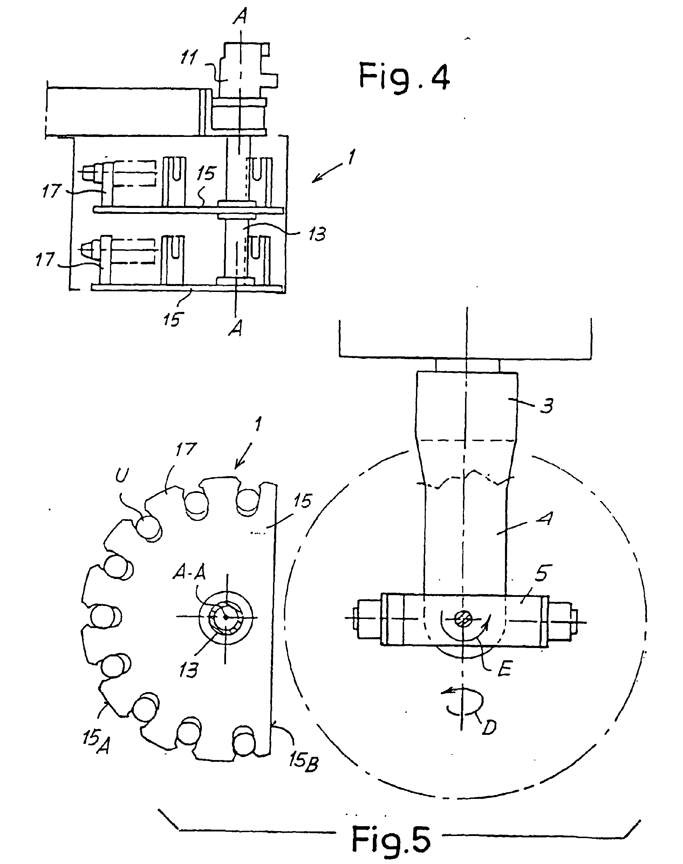

Fig. 4 shows a modified embodiment of the tool-holder storage device 1. In this embodiment, two series of supports 17 are provided and placed on two different levels. The tools are supported radially again onto the double level rotating unit. The same reference numbers designate identical or corresponding parts to those shown in the previous embodiment.

Fig 5 shows a modified embodiment whereby the tools are supported with their own axis parallel to the rotation axis A-A of the rotating unit 15. For example, the spindle is illustrated double in this case, but it should be understood that the configuration of the spindle can vary in all the cases described (single, double, or even with a greater number of tools, for example, as a crossed spindle with four tools). The movement of tool engagement and deposit performed by the spindle 5 is parallel to axis A-A while in the two previous cases it was radial.

The embodiment shown in Fig. 5 enables a greater number of tools to be positioned on the same level compared with the embodiment shown in Fig. 1, without having to use the multiple-level arrangement shown in Fig. 4.

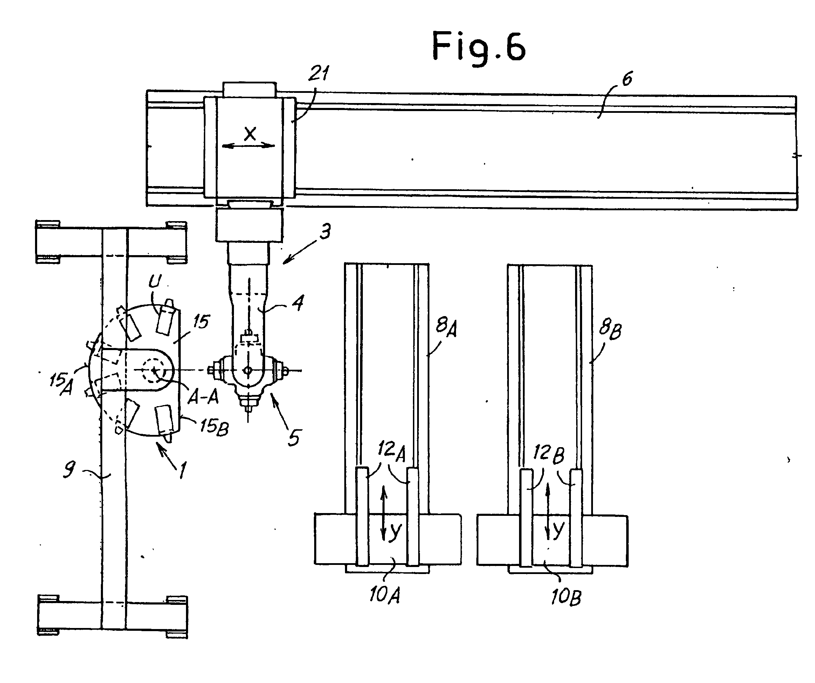

Fig. 6 illustrates a schematic plan view of a machine tool or complete work station, equipped with the tool-holder storage device according to the invention. The machine tool has a structure similar to the type described and illustrated in EP-A-0873817.

Reference number 1 designates the tool-holder storage device and the reference number 3 designates the operating head supported by a unit 21 moving along an X axis, translating along a base 6. In front of base 6, there are two secondary bases 8A and 8B on which two slides 10A and 10B translate, supporting beams 12A, 12B where the workpieces undergoing processing are clamped on. Y designates the axis of horizontal translation perpendicular to the X axis. In this case, the movement along the Y direction is assigned to the slides 10A and 10B and therefore to the workpiece, instead of to the operating head 3. This movement is not necessary for carrying out the tool change operation. The third translation axis Z is vertical and therefore perpendicular to the plane of the figure.

The operating head 3 is equipped with a fork 4 bearing a crossed spindle 5.

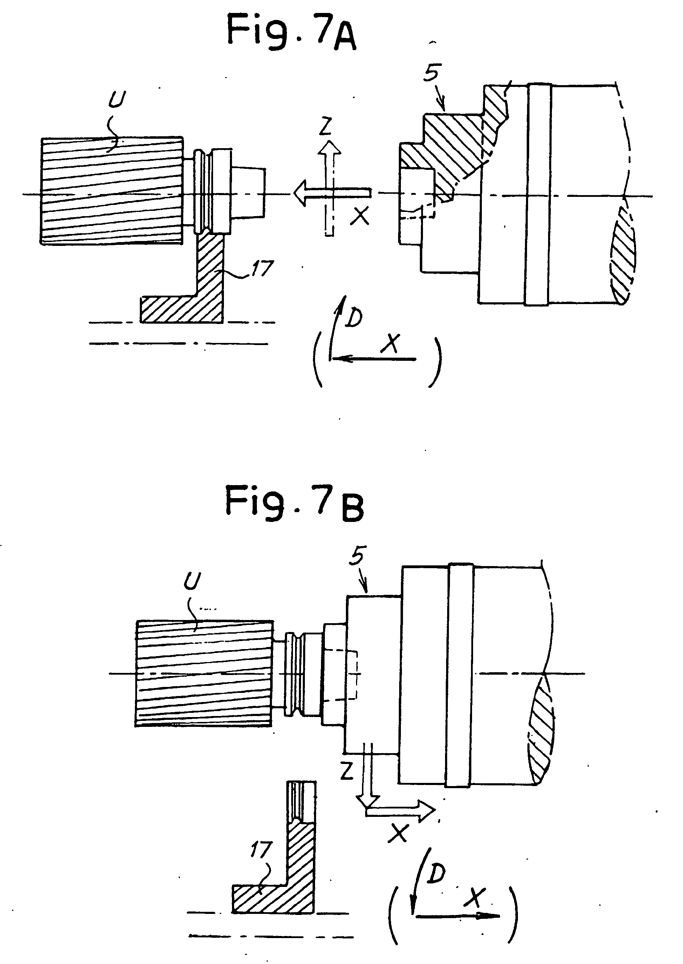

Figs 7A and 7B illustrate schematically the movements that the spindle 5 carries out in withdrawing the tool U (Fig. 7A) and the movements necessary in depositing the tool U in the storage device 1. The withdrawal movement is a movement of approach along axis X to convey the shank of the tool U into engagement with the spindle and then a movement along the Z direction for extracting the spindle from the support 17. An alternative sequence of movements is indicated between parentheses, where the tool U is distanced from support 17 by means of a rotation around the D axis.

Movements in the reverse direction according to the Z and X direction or according to the D and X direction enable the tool U to be deposited in the storage device (Fig.7B).

The inventive concept illustrated above in a series of embodiments can be implemented in a variety of solutions, including with rotating units that don't have circular edges. For example, it can be envisaged that the rotating unit has a polygonal development, for example, hexagonal, octagonal or with a larger number of sides. The supports 17 of the tools U will be positioned along the sides, while a part of the polygon will be removed in order to obtain the possibility to conceal the storage device from the working area i.e. the area of substitution of the tools by means of a simple rotation of the unit around its axis. In general, the supports 17 of the tools are positioned along an arc of a circumference which is less than 360° and therefore constituting a portion of the circumference along which the supports are moved by means of the rotation of the rotating unit 15 around the axis of rotation A-A. The rotating unit is correspondingly cut in the area in which the supports for the tools will not be positioned, in order to reduce its overall dimensions that will consequently free up the area of the tool change by means of the simple rotation of the rotating unit 15 along the A-A axis of the tool selection.

It is understood that the illustration shows only practical and non-limiting embodiments of the invention, which can vary in its forms and arrangement without departing from the framework of the concept on which the invention is based, as defined in the claims that follow. The presence of reference numbers in the claims included does not limit the scope of protection and have the sole purpose of facilitating the reading reference being made to the preceding description.

## Claims

1. A machine tool including:
- an operating head (3) with at least one spindle (5) for a tool (U), said spindle being movable in translation or rotation along at least two numeric-control axes (D; E; X; Y; Z);
- and a tool-holder storage device (1) with a rotating unit (15) rotating around a respective axis of rotation (A-A) equipped with a plurality of supports (17) for said tools (U), said rotating unit (15) having a disc shape with a portion removed along a first section (15B) of its perimeter development, the supports (17) being arranged around the remaining section (15A) of the perimeter development of the rotating unit (15), the rotation around said axis (A-A) introducing and removing the supports (17) into and from a withdrawal and deposit area of the tools from and onto said supports (17);
**characterized in that**
- said supports (17) are designed such that the tools are supported therein with their axes in a radial position with respect to the axis of rotation (A-A) of said rotating unit (15);
- said rotating unit (15) is arranged such that by rotating until the said first section (15B) of its perimeter is facing the working area of movement of the tool (C) of the said operating head (3), the rotating unit (15) does not interfere with the working area (C); while, by rotating the rotating unit (15) until the portion where the supports (17) of the tools are positioned is facing towards the working area (C), the rotating unit (15) enters the area accessible by the operating head (3); and said numeric control axes (D; E; X; Y; Z) include at least one rotation axis (D; E) to bring said spindle in alignment with one of said supports (17).

2. A machine tool according to Claim 1, **characterized in that** said rotating unit (15) has an asymmetrical shape with respect to a plane perpendicular to the rotating unit (15) and containing the axis of rotation (A-A) of said rotating unit (15).

3. A machine tool according to Claim 1 and 2, **characterized in that** said supports (17) of the tools are arranged along an arc of less than 360° in circumference, along which the supports (17) are moved with the rotation of said rotating unit (15) around the axis of rotation (A-A).

4. A machine tool according to Claim 1, 2 and 3, **characterized in that** the supports (17) of the tools are contained in a section of an annulus having a development less than 360°.

5. A machine tool according to one of the Claims 1 to 4, **characterized in that** the rotating unit (15) has a disk shape with a circular segment development.

6. A machine tool according to one of the Claims 1 to 4, **characterized in that** said rotating unit (15) has the shape of a segment of an annulus.

7. A machine tool according to Claim 5, **characterized in that** the segment of circle is delimited by a circumferential edge and a chord, the centre of the circle to which this segment belongs lying on the axis of rotation (A-A) of said rotating unit.

8. A machine tool according to one of the Claims 1 to 4, **characterized in that** said rotating unit has the shape of a section of an annulus supported by a shaft that intersects the center of the annulus, said center lying on the axis of rotation (A-A) of the rotating unit (15).

9. A machine tool according to one of the preceding Claims, **characterized by** including a motor (11) for controlling the rotation of said rotating unit (15).

10. A machine tool according to Claim 9, **characterized in that** the movement of said motor (11) is controlled in a synchronized way with the movement of spindle (5) approach of the machine tool to which the storage device (1) is associated.

11. A machine tool according to one of the preceding Claims, **characterized in that** said rotating unit (15) presents at least two overlapping series of these supports (17).

12. A machine tool according to one of the preceding Claims, **characterized in that** said machine tool is controlled by a programmable central unit, said central unit controlling the movements of said spindle (5), and that the tool-holder storage device (1) is associated with a motor (11) that controls the rotation around its respective axis (A-A), said motor (11) being controlled by said central unit in order to position the tool-holder storage device (1) in a way synchronized with the movement of the spindle (7).

13. A machine tool according to one of the preceding claims, **characterized in that** said spindle (7) is moveable along two horizontal translation axes (X, Y), a vertical translation axis (Z) and two oscillating axes (D,E).

## Patentansprüche

1. Werkzeugmaschine, enthaltend:
- einen Arbeitskopf (3) mit mindestens einer Spindel (5) für ein Werkzeug (U), wobei die Spindel in Translation oder Rotation längs mindestens zweier numerisch gesteuerter Achsen (D; E; X; Y; Z) bewegbar ist;
- und eine Werkzeughalter-Speichervorrichtung (1) mit einer drehbaren Einheit (15), die um eine entsprechende Rotationsachse (A-A) rotiert und mit einer Mehrzahl von Trägem (17) für die Werkzeuge (U) versehen ist, wobei die drehbare Einheit (15) die Form einer Scheibe aufweist mit einem weggeschnittenen Teil längs eines ersten Abschnitts (15B) ihrer Umfangslänge, wobei die Träger (17) um den restlichen Abschnitt (15A) der Umfangslänge der drehbaren Einheit (15) herum angeordnet sind, wobei die Drehung um die Achse (A-A) die Träger (17) in einen Entnahme- und Ablagebereich für die Werkzeuge von bzw. zu den Trägem (17) hinein- und aus ihm herausbewegt;
**dadurch gekennzeichnet, dass**
- die Träger (17) so ausgebildet sind, dass die Werkzeuge in ihnen mit ihren Achsen in radialer Anordnung bezüglich der Drehachse (A-A) der drehbaren Einheit (15) gehalten sind;
- die drehbare Einheit (15) so angeordnet ist, dass bei einer Drehung, so weit, dass der erste Abschnitt (15B) ihres Umfangs dem Bereich der Arbeitsbewegung des Werkzeugs (C) des Arbeitskopfes (3) gegenübersteht, die drehbare Einheit (15) nicht in den Arbeitsbereich (C) hineinragt, während bei einer Drehung der drehbaren Einheit (15) so weit, dass der Abschnitt, in dem die Träger (17) für die Werkzeuge angeordnet sind, dem Arbeitsbereich (C) gegenübersteht, die drehbare Einheit (15) in den für den Arbeitskopf (3) zugänglichen Bereich eintritt;
- und dass die numerisch gesteuerten Achsen (D; E; X; Y; Z) mindestens eine Rotationsachse (D; E) beinhalten, um die Spindel in Ausrichtung mit einem der Träger (17) zu bringen.

2. Werkzeugmaschine nach Anspruch 1, **dadurch gekennzeichnet, dass** die drehbare Einheit (15) eine asymmetrische Form bezüglich einer Ebene, die senkrecht zur drehbaren Einheit (15) ist und die Drehachse (A-A) der drehbaren Einheit (15) enthält, aufweist.

3. Werkzeugmaschine nach Anspruch 1 und 2, **dadurch gekennzeichnet, dass** die Träger (17) für die Werkzeuge entlang einem Bogen von weniger als 360° in Umfangsrichtung angeordnet sind, längs dem die Träger (17) bei der Drehung der drehbaren Einheit (15) um die Drehachse (A-A) bewegt werden.

4. Werkzeugmaschine nach Anspruch 1, 2 und 3, **dadurch gekennzeichnet, dass** die Träger (17) der Werkzeuge in einem Ringabschnitt mit einer Erstreckung von weniger als 360° enthalten sind.

5. Werkzeugmaschine nach einem der Ansprüche 1 bis 4, **dadurch gekennzeichnet, dass** die drehbare Einheit (15) eine Scheibenform mit der Erstreckung eines Kreissegments hat.

6. Werkzeugmaschine nach einem der Ansprüche 1 bis 4, **dadurch gekennzeichnet, dass** die drehbare Einheit (15) die Form eines Ringsegments hat.

7. Werkzeugmaschine nach Anspruch 5, **dadurch gekennzeichnet, dass** das Kreissegment begrenzt ist durch eine Umfangskante und eine Sehne, wobei der Mittelpunkt des Kreises, zu dem das Segment gehört, auf der Drehachse (A-A) der drehbaren Einheit liegt.

8. Werkzeugmaschine nach einem der Ansprüche 1 bis 4, **dadurch gekennzeichnet, dass** die drehbare Einheit die Form eines Ringabschnitts hat, der durch eine Welle getragen wird, die den Mittelpunkt des Rings schneidet, wobei der Mittelpunkt auf der Drehachse (A-A) der drehbaren Einheit (15) liegt.

9. Werkzeugmaschine nach einem der vorangehenden Ansprüche, **dadurch gekennzeichnet, dass** sie einen Motor (11) zum Steuern der Drehung der drehbaren Einheit (15) aufweist.

10. Werkzeugmaschine nach Anspruch 9, **dadurch gekennzeichnet, dass** die Bewegung des Motors (11) gesteuert wird in Synchronisation mit der Annäherungsbewegung der Spindel (5) der Werkzeugmaschine, der die Speichervorrichtung (1) zugeordnet ist.

11. Werkzeugmaschine nach einem der vorangehenden Ansprüche, **dadurch gekennzeichnet, dass** die drehbare Einheit (15) mindestens zwei sich überlappende Reihen der Träger (17) aufweist.

12. Werkzeugmaschine nach einem der vorangehenden Ansprüche, **dadurch gekennzeichnet, dass** die Werkzeugmaschine von einer programmierbaren Zentraleinheit gesteuert ist, wobei die Zentraleinheit die Bewegungen der Spindel (5) steuert, und dass der Werkzeughalter-Speichervorrichtung (1) ein Motor (11) zugeordnet ist, der die Drehung um die entsprechende Achse (A-A) steuert, wobei der Motor (11) durch die Zentraleinheit gesteuert wird, um die Werkzeughalter-Speichervorrichtung (1) in einer mit der Bewegung der Spindel (7) synchronisierten Weise zu positionieren.

13. Werkzeugmaschine nach einem der vorangehenden Ansprüche, **dadurch gekennzeichnet, dass** die Spindel (7) längs zweier horizontaler Translationsachsen (X, Y), einer vertikalen Translationsachse (Z) und zwei Oszillationsachsen (D, E) bewegbar ist.

## Revendications

1. Machine-outil comportant :
- une tête d'actionnement (3) dotée d'au moins une broche (5) pour un outil (U), ladite broche étant mobile en translation ou en rotation le long d'au moins deux axes de commande numérique (D ; E ; X ; Y ; Z) ;
- et un dispositif de stockage de porte-outil (1) doté d'une unité rotative (15) tournant autour d'un axe de rotation (A-A) respectif équipé d'une pluralité de supports (17) pour lesdits outils (U), ladite unité de rotative (15) présentant une forme de disque dotée d'une partie retirée le long d'une première section (15B) de son développement périmétrique, les supports (17) étant agencés autour de la section restante (15A) du développement périmétrique de l'unité rotative (15), la rotation autour dudit axe (A-A) introduisant et retirant les supports (17) à l'intérieur et à l'extérieur d'une zone de retrait et de dépôt des outils à partir desdits supports et sur ceux-ci (17) ;
**caractérisée en ce que**
- lesdits supports (17) sont conçus de telle sorte que les outils y sont supportés avec leurs axes dans une position radiale par rapport à l'axe de rotation (A-A) de ladite unité rotative (15) ;
- ladite unité rotative (15) est agencée de telle sorte qu'à l'occasion de la rotation jusqu'à ce que ladite première section (15B) de son périmètre soit tournée vers la zone de travail du mouvement de l'outil (C) de ladite tête d'actionnement (3), l'unité rotative (15) n'interfère pas avec la zone de travail (C) ; alors que, en amenant en rotation l'unité rotative (15) jusqu'à ce que la portion, dans laquelle les supports (17) des outils sont positionnés, soit tournée vers la zone de travail (C), l'unité rotative (15) pénètre dans la zone accessible par la tête d'actionnement (3) ;
- et lesdits axes de commande numérique (D ; E ; X ; Y ; Z) comportent au moins un axe de rotation (D ; E) pour amener ladite broche en alignement sur un desdits supports (17).

2. Machine-outil selon la revendication 1, **caractérisée en ce que** ladite unité rotative (15) présente une forme asymétrique par rapport à un plan perpendiculaire à l'unité rotative (15) et contenant l'axe de rotation (A-A) de ladite unité rotative (15).

3. Machine-outil selon l'une quelconque des revendications 1 et 2, **caractérisée en ce que** lesdits supports (17) des outils sont agencés le long d'un arc inférieur à 360° de circonférence, le long duquel les supports (17) sont déplacés avec la rotation de ladite unité rotative (15) autour de l'axe de rotation (A-A).

4. Machine-outil selon l'une quelconque des revendications 1, 2 et 3, **caractérisée en ce que** les supports (17) des outils sont contenus dans une section d'un tore présentant un développement inférieur à 360°.

5. Machine-outil selon l'une quelconque des revendications 1 à 4, **caractérisée en ce que** l'unité rotative (15) présente une forme de disque dotée d'un développement de segment circulaire.

6. Machine-outil selon l'une quelconque des revendications 1 à 4, **caractérisée en ce que** ladite unité rotative (15) présente la forme d'un segment d'un tore.

7. Machine-outil selon la revendication 5, **caractérisée en ce que** le segment de cercle est délimité par un bord circonférentiel et une corde, le centre du cercle auquel ce segment appartient se situant sur l'axe de rotation (A-A) de ladite unité rotative.

8. Machine-outil selon l'une quelconque des revendications 1 à 4, **caractérisée en ce que** ladite unité rotative présente la forme d'une section d'un tore supporté par une tige qui coupe le centre du tore, ledit centre étant situé sur l'axe de rotation (A-A) de l'unité rotative (15).

9. Machine-outil selon l'une quelconque des revendications précédentes, **caractérisée en ce qu'**elle comporte un moteur (11) destiné à commander la rotation de ladite unité rotative (15).

10. Machine-outil selon la revendication 9, **caractérisée en ce que** le mouvement dudit moteur (11) est commandé d'une manière synchronisée avec le mouvement d'approche de la broche (5) de la machine-outil à laquelle le dispositif de stockage (1) est associé.

11. Machine-outil selon l'une quelconque des revendications précédentes, **caractérisée en ce que** ladite unité rotative (15) présente au moins deux séries de ces supports (17) en chevauchement.

12. Machine-outil selon l'une quelconque des revendications précédentes, **caractérisée en ce que** ladite machine-outil est commandée par une unité centrale programmable, ladite unité centrale commandant les mouvements de ladite broche (5), et **en ce que** le dispositif de stockage de porte-outil (1) est associé à un moteur (11) qui commande la rotation autour de son axe (A-A) respectif, ledit moteur (11) étant commandé par ladite unité centrale afin de positionner le dispositif de stockage de porte-outil (1) d'une manière synchronisée avec le mouvement de la broche (7).

13. Machine-outil selon l'une quelconque des revendications précédentes, **caractérisée en ce que** ladite broche (7) est mobile le long de deux axes de translation horizontaux (X, Y), d'un axe de translation vertical (Z) et deux axes oscillants (D, E).
